Europäisches Patentamt

(19) European Patent Office

Office européen des brevets

(11) Numéro de publication: **0 061 373**
**B1**

(12) **FASCICULE DE BREVET EUROPEEN**

(45) Date de publication du fascicule du brevet: **18.05.88**

(21) Numéro de dépôt: **82400379.2**

(22) Date de dépôt: **04.03.82**

(51) Int. Cl.⁴: **G 07 C 9/00,** G 07 F 7/08

(54) **Système de contrôle par exemple pour le passage de points de péage.**

(30) Priorité: **05.03.81 FR 8104446**

(43) Date de publication de la demande:
**29.09.82 Bulletin 82/39**

(45) Mention de la délivrance du brevet:
**18.05.88 Bulletin 88/20**

(84) Etats contractants désignés:
**AT CH IT LI**

(56) Documents cités:
**FR-A-2 044 691
FR-A-2 136 269
FR-A-2 180 349
FR-A-2 336 741
FR-A-2 386 080
GB-A-2 057 740
US-A-3 859 634
US-A-3 869 700
US-A-3 906 460
US-A-3 939 679
US-A-4 001 550
US-A-4 048 475
US-A-4 204 113
US-A-4 242 663**

(73) Titulaire: **ELECTRONIQUE SERGE DASSAULT
80, avenue Marceau
F-75008 PARIS (FR)**

(72) Inventeur: **Glize, Jean-Pierre
Place Royale
F-40240 Labastide d'Armagnac (FR)**
Inventeur: **Gaucher, Michel
6, avenue des Platanes
F-78320 Le Mesnil Saint Denis (FR)**

(74) Mandataire: **Netter, André et al
Cabinet NETTER 40, rue Vignon
F-75009 Paris (FR)**

EP 0 061 373 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention a pour objet un système de contrôle du type dans lequel une information mise en mémoire dans un objet portatif peut être contrôlée en associant l'objet à un terminal qui délivre ou non une autorisation selon le résultat de ce contrôle. Elle vise par exemple des équipements de postes de péage dans lesquels un tel objet, porté par une personne ou un véhicule, par exemple, est présenté à un dispositif de contrôle qui n'autorise le passage que si l'information mémorisée traduit le paiement d'un montant suffisant et/ou une date limite de validité convenable.

On connaît des systèmes de contrôle d'accès qui mettent en oeuvre des cartes pourvues d'une mémoire à piste magnétique, propres à être introduites dans la fente d'un terminal ou dispositif de contrôle d'accès à l'intérieur duquel est lue l'information portée par la piste magnétique. Lorsque cette information est reconnue convenable, une autorisation d'accès est délivrée en même temps qu'une information nouvelle est inscrite sur la piste magnétique avant que l'utilisateur ne la retire de la fente. Cette inscription peut être soit identique à la précédente, soit modifiée en fonction de paramètres qui dépendent du type de contrôle envisagé.

Les dispositifs de contrôle d'accès à carte magnétique sont cependant parfois d'une utilisation peu aisée en raison de l'étroitesse de la fente dans laquelle doit être insérée la carte pour une lecture précise de son contenu par des transducteurs appropriés. Ainsi, lorsque le dispositif de contrôle d'accès est utilisé sur certains équipements, tels que par exemple des remontées mécaniques dans les stations de sports d'hiver, le maniement de cartes par des utilisateurs dont les mains ne sont pas libres, s'avère particulièrement lent et mal commode.

Les cartes magnétiques présentent en outre l'inconvénient que les inscriptions qu'elles portent peuvent être lues par des fraudeurs relativement facilement à l'aide d'un équipment approprié en vue de la reproduction illicite de ces inscriptions sur une carte vierge.

De plus, la quantité d'informations enregistrées sur la ou les pistes magnétiques est très vite limitée par les dimensions physiques de la ou des pistes magnétiques, de la qualité des transducteurs et de la proximité de ceux-ci avec la ou les pistes magnétiques.

Enfin, les équipements de lecture de ces cartes sont chers et parfois mal adaptés à des conditions d'environnement sévères. Ils nécessitent en effet la présence de transducteurs magnétiques relativement coûteux et de moyens de déplacement de la carte relativement aux transducteurs ou vice versa qui les rendent à la fois complexes et sujets à des pannes, particulièrement lorsqu'ils doivent fonctionner dans des lieux peu protégés contre les intempéries et les variations de température.

On a également proposé un dispositif de contrôle dans lequel un jeton peut être couplé avec un terminal afin d'assurer un transfert de données entre ce jeton et un calculateur dans le terminal. Le jeton comprend un élément de mémoire à registre à décalage dont les informations peuvent être lues lors de chaque transaction par le terminal. Après traitement par celui-ci, une nouvelle information est écrite dans la mémoire à registre à décalage.

Selon une forme de réalisation d'un tel système, le couplage entre le jeton et le terminal s'effectue par induction. Afin d'éviter que le registre ne puisse être réinscrit en fraude, un dispositif de vérification est prévu qui permet de comparer un caractère de contrôle de validité du terminal avec un caractère d'identification inscrit de façon permanente dans le jeton. La coïncidence de ces deux informations permet d'inscrire une nouvelle information dans le registre de mémoire du jeton couplé au terminal. Afin d'éviter la fraude qui consisterait à essayer de déterminer le caractère d'identification préinscrit dans le jeton par un grand nombre d'essais successifs, un comptage du nombre de tentatives d'inscriptions infructueuses est effectué. Lorsque ce nombre dépasse un seuil prédéterminé, le jeton peut être invalidé.

Cependant, un même caractère d'identification doit être utilisé dans un très grand nombre de jetons. Il existe donc un risque, qu'à la longue le caractère d'identification de ces jetons ne finisse par être connu, ouvrant ainsi la porte à la fraude qui consisterait à réinscrire un jeton à l'aide d'informations correspondant par exemple à un nombre d'unités de paiement supérieur au nombre d'unités pour lequel le jeton a été acquis.

La présenté invention vise notamment à améliorer la sécurité de systèmes qui mettent en oeuvre des terminaux de contrôle et des objets portatifs à mémoire électronique, contre la réinscription non autorisée de données dans la mémoire de ces objets. Elle vise en partiulier à réaliser un tel objet d'une manière extrêmement simple de façon à en maintenir le coût à un niveau très faible, tout en permettant de l'utiliser pour des transactions nécessitant une bonne sécurité contre la fraude.

L'invention concerne un object portatif destiné à servir dans un système de contrôle automatique, du type comprenant, dans un boîtier (US—A—3 859 634):

—un circuit électronique muni d'au moins un registre à décalage formant mémoire principale pour mémoriser des informations utiles, comprenant un droit de passage,

—un dispositif émetteur-récepteur sans contact, capable, dans une condition de couplage avec un terminal du système de contrôle, d'émettre des signaux de bits série correspondant à la lecture desdites informations dans ledit registre à décalage, et de recevoir des signaux de bits série pour la réinscription d'informations utiles dans ce registre à décalage,

—des moyens d'enregistrement d'une première information de contrôle émise par le terminal et reçue par le dispositif émetteur-récepteur de l'objet portatif lors de chaque utilisation de ce dernier dans le but d'obtenir ledit droit de passage,

—un dispositif de vérification de la concordance entre ladite première information de contrôle et une première information de validité mémorisée dans ledit objet, pour autoriser la lecture de la mémoire principale de l'objet, au profit du terminal, et

—des moyens qui réagissent à cette première vérification de concordance en faisant sortir bit à bit le contenu du registre à décalage vers le dispositif émetteur-récepteur, pour transmission au terminal, tout en faisant recirculer les bits dudit contenu dans le registre à décalage.

Selon l'invention, l'objet portatif comprend aussi, également dans son boîtier:

—des moyens d'enregistrement coopérant avec ledit dispositif émetteur-récepteur de telle façon que, le terminal ayant retransmis vers l'objet portatif les données utiles lues dans la mémoire principale de ce dernier, ils enregistrent une partie de ces données utiles constituant une seconde information de contrôle,

—un dispositif pour vérifier la concordance entre cette seconde information de contrôle et une seconde information de validité, stockée dans l'objet, et comprenant une partie des données utiles contenues et recirculées dans le registre à décalage, afin d'autoriser l'accès en écriture à la mémoire principale de l'objet, au profit du terminal,

—des moyens qui réagissent à cette autorisation d'écriture de telle façon que des informations utiles modifiées transmises depuis le terminal à l'objet portatif pendant une utilisation de ce derner, sont enregistrées dans la mémoire principale dudit objet portatif pour y constituer une seconde information de validité modifiée en vue d'une utilisation ultérieure dudit objet.

Le terminal est ainsi en mesure:

a) d'exécuter une modification de ladite seconde information de validité stockée dans l'objet portatif à l'occasion de chaque utilisation de ce dernier dans le but d'obtenir ledit droit de passage,

b) de vérifier que ladite modification de ladite seconde information de validité a été correctement enregistrée dans ledit register à décalage,

c) de procéder, le cas échéant, à une ou plusieurs réinscriptions de ladite seconde information de validité modifiée, et

d) de n'accorder ledit droit de passage, mettant fin à une utilisation dudit objet portatif dans ce but, que si ladite seconde information de validité modifiée transmise pendant ladite utilisation de l'objet portatif, a été correctement enregistrée dans ledit register à décalage.

Grâce au renouvellement de l'information de validité, à chaque réinscription, il est très difficile pour un fraudeur de connaître cette information en vue d'émettre en direction de l'objet une information de contrôle correspondante en vue d'autoriser la réinscription. En outre, en opérant la vérification de concordance entre l'information de validité et l'information de contrôle à l'intérieur de l'objet, on évite la fraude qui consisterait à déclencher à partir de la lecture d'un premier objet un signal d'autorisation de réinscription qui pourrait être utilisé pour la réinscription d'un deuxième objet qui aurait été entre temps substitué au premier objet. En effet, le terminal ne peut procéder à cette réinscription que lorsqu'il reçoit le signal d'autorisation de l'objet à réinscrire lui-même.

Divers types de signaux peuvent être utilisés pour la mise en oeuvre de l'invention. Par exemple, on peut émettre des ondes lumineuses dans l'infrarouge à l'aide de diodes électroluminescentes. On peut également utiliser de petits émetteurs récepteurs d'ondes électromagnétiques hyperfréquence, ou des transducteurs de signaux acoustiques qui peuvent avantageusement fonctionner alternativement en émission et réception.

La description suivante d'exemples de réalisation est donnée à titre d'exemple non limitatif en référence aux dessins annexés, dans lesquels:

la figure 1 représente un objet portatif conforme à l'invention;

la figure 2 représente un terminal de contrôle d'accès appartenant à un système selon l'invention;

la figure 3 représente schématiquement un circuit électronique à l'intérieur de l'objet portatif de la figure 1;

la figure 4 représente schématiquement une partie d'un circuit équipant le dispositif de la figure 2;

la figure 5 est un diagramme de signaux d'un type qui peut être mis en oeuvre dans le cadre de l'invention;

la figure 6 représente une autre forme de réalisation du circuit de la figure 4;

la figure 7 est un diagramme de signaux de lecture et d'écriture du dispositif de la figure 6;

les figures 8 à 10 illustrent trois variantes de réalisation de la mémoire à registre à décalage de son dispositif de vérification de concordance associé, dans un circuit analogue à celui de la figure 6.

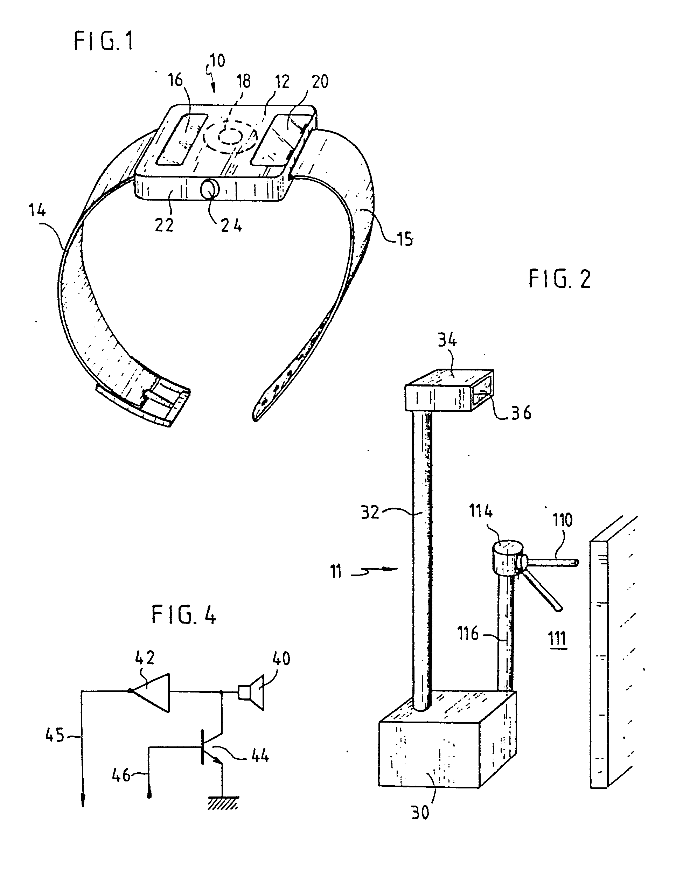

Un objet portatif 10 (figure 1) comprend un boîtier en matière plastique 12 de forme générale rectangulaire et de faible épaisseur dont l'allure n'est pas sans rappeler celle d'un boîtier de montre par exemple. Ce boîtier 12 est relié sur deux côtés opposées à deux lanières 14 et 15 d'un bracelet permettant à un utilisateur d'attacher ce boîtier 12 autour de son poignet.

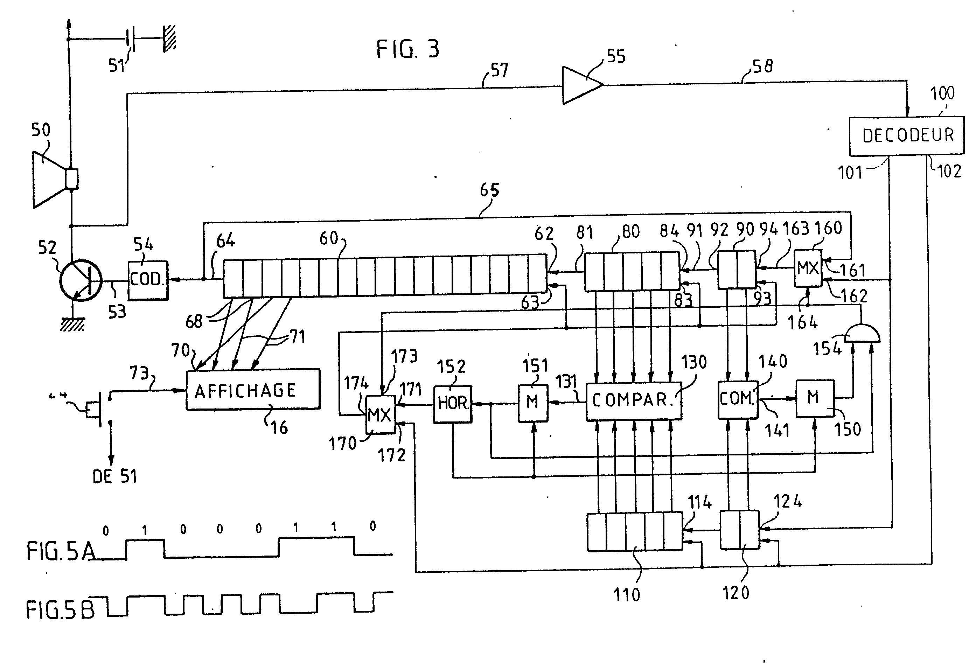

Sur la face supérieure du boîtier 12 est ménagée une fenêtre 16 pour l'affichage, par exemple à l'aide de cristaux liquides, d'informations mises en mémoire dans un circuit électronique noyé dans la masse du boîtier 12 et dont la structure est explicitée en référence à la figure 3. Dans la partie centrale de la face supérieure du boîtier, on a représenté par un trait pointillé 18, la trace de la face active d'un cristal piézo-électrique noyé également dans la masse du boîtier 12. Un couvercle 20 à la surface supérieure du boîtier 12 permet l'accès à un compartiment destiné à recevoir une pile d'alimentation des circuits intégrés C-MOS constituant la partie électronique de l'objet 10.

Sur l'une des faces latérales 22 du boîtier 12 fait saillie un bouton 24 de commande de l'affichage dans la fenêtre 16 des informations mémorisées dans l'objet 10.

Le cristal piézo-électrique dont la trace apparaît en 18 est destiné à émettre des ondes acoustiques à une fréquence ultra sonore choisie par exemple dans une fourchette de 50 à 150 kHz, dans un angle solide très petit perpendiculairement à la surface supérieure du boîtier 12.

Un terminal de contrôle d'accès 11 (figure 2) comprend une embase 30 destinée à être fixée au sol d'un couloir d'accès.

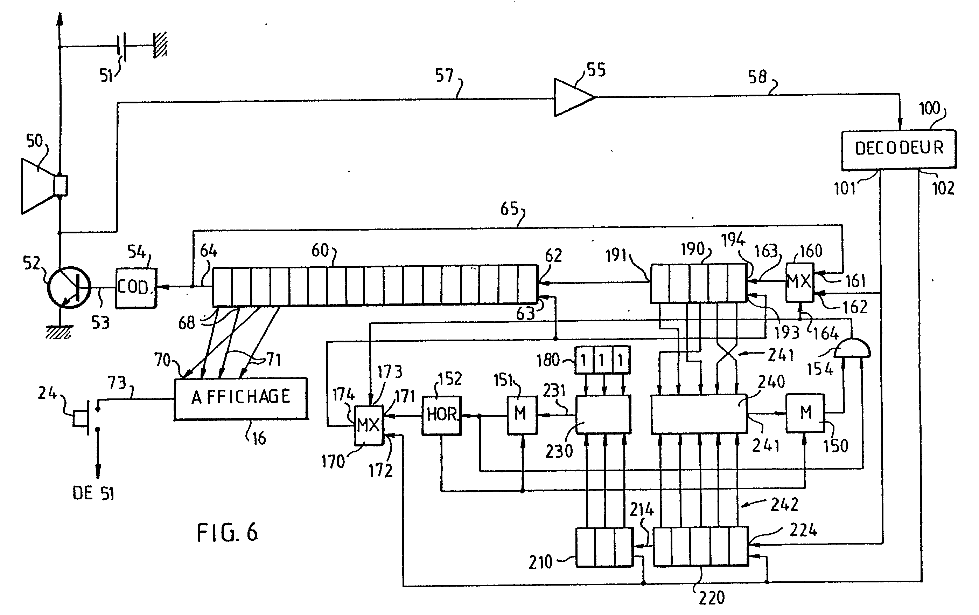

De l'embase 30 dépend une potence 32 au sommet de laquelle est montée une boîte 34 de forme sensiblement parallélépipédique et ouverte sur sa face verticale avant 36, qui limite une enceinte au fond de laquelle est logé un transducteur acoustique 40 (figure 4) fonctionnant à la fréquence sélectionnée mentionnée ci-dessus. Ce transducteur de faible puissance mais très directif est du type piézo-électrique. Il est rendu encore plus directif par sa position au fond de l'enceinte 34 et par la forme et le revêtement interne de cette enceinte. Les parois internes de l'enceinte absorbent les ondes qui les frappent de sorte que pratiquement seules parviennent à l'ouverture 36 les signaux émis dans un faisceau de faible ouverture angulaire. Il est alimenté à partir de circuits électroniques logés dans l'embase 30.

Le circuit associé à ce transducteur 40 (figure 4) comprend d'une part un amplificateur 42 branché aux bornes du cristal 40 et relié par une ligne 45 à un circuit de réception (non représente) logé dans l'embase 30, et d'entre part un transistor 44 dont la base est commandée par une ligne 46 reliée à un circuit d'émission (non représenté), également logé dans l'embase 30, pour la commande de l'émission de signaux ultra-sonores par le transducteur 40.

Les dimensions de l'ouverture 36 sur la face avant de la boîte sommitale 34 de la potence 32 sont, par exemple, d'environ 50 mm × 50 mm. La hauteur de la potence est choisie à la hauteur de taille d'une personne de stature moyenne, de telle sorte qu'il est aisé pour toute personne portant un objet portatif tel que 10 à sont poignet, de présenter la face supérieure du boîtier 12 devant la face 36 de l'enceinte du terminal 11. Dans cette position, les transducteurs acoustiques de l'objet 10 et du terminal 11 peuvent échanger des signaux acoustiques en vue d'une opération de contrôle d'accès selon une procédure qui sera décrite ci-après.

Le transducteur piézo-électrique de l'objet portatif 10 est représenté en 50 sur la figure 3, sous la forme schématique d'un haut-parleur. Il n'est pas nécessaire qu'il présente des caractéristiques de directivité analogues à celles du transducteur 40. Aux bornes de ce cristal sont montés, d'une part, un circuit d'émission comprenant un transistor 52 dont la base est commandée par une ligne 53 en sortie d'un codeur 54 et, d'autre part, un circuit de réception comprenant un amplificateur 55 dont l'entrée 57 est reliée au cristal 50.

Le cristal piézo-électrique 50 est alimenté par une pile 51 logée dans le compartiment fermé par le couvercle 20 qui est destiné à fournir l'énergie à tous les éléments actifs du circuit de la figure 3.

Un circuit intégré à registre à décalage est réalisé en trois parties représentées de façon distincte pour la clarté des explications: un registre à décalage 60 qui comporte entre 60 et 2000 cellules (60 à 2000 bits correspondant aux informations à stocker) connectées en série avec une entrée 62 et une sortie série 64 reliée d'une part au codeur 54 et d'autre part à l'entrée 161 d'un multiplexeur 160; un registre à décalage dit de lecture 80 connecté en tête du registre 60; et un autre registre à décalage dit d'écriture 90 connecté en tête du registre 80 par la liaison 91.

Les informations stockées dans le registre 60 peuvent être visualisées par l'intermédiaire des sorties parallèles 68 de ce registre connectées aux entrées 70 du dispositif d'affichage 16. Les tracés des lignes 71 sont prévus de manière à établir une correspondance, en principe gardée secrète, entre les bits de sortie du registre 60 et les bits d'entrée de l'afficheur 16. Autrement dit, on prévoit que l'information aux sorties 68 du registre 60, qui peut correspondre à une information de quantité ou à une date limite de validité, est codée de telle manière que, lorsque les bits 68 sont transmis aux entrées 70 de l'afficheur, ce dernier fasse apparaître une indication correspondant en clair au contenu des informations stockées dans le registre 60. L'afficheur est mis sous tension par une ligne de commande 73 à travers le bouton poussoir 24.

L'entrée 62 du registre 60 est connectée à la sortie 81 du registre 80 qui reçoit sur son entrée série 84 la sortie série 92 du registre 90. L'entrée 94 du registre 90 reçoit par l'intermédiaire du multiplexeur 160, soit les informations issues du registre 60 (celui-ci étant alors rebouclé sur lui-même par la ligne 65) soit les informations en provenance du décodeur 100 dont l'entrée est connectée par une ligne 58 à la sortie de l'amplificateur 55.

La sortie 101 du décodeur 100 est également reliée à l'entrée série 124 d'un registre à décalage 120 dont la sortie est réunie à l'entrée série 114 d'un second registre à décalage 110. Les nombres de cellules des registres 110 et 120 sont respectivement équivalents aux nombres de cellules des registres 80 et 90. Les sorties parallèles des registres 110 et 80 sont appliquées aux entrées parallèles d'un comparateur 130. La sortie 131 de ce comparateur est mémorisée par une mémoire 151. La sortie de cette mémoire agit sur une horloge interne 152 et sur un circuit logique "ET" 154. L'horloge interne 152 est propre à produire des impulsions qui sont transmises à l'entrée 171 d'un multiplexeur 170. La sortie de ce multiplexeur est reliée aux entrées horloges de décalage des trois registres 60, 80 et 90.

Le décodeur 100 possède une sortie d'horloge 102 qui est connectée aux entrées d'horloge de décalage des registres 110 et 120 et à l'entrée 172 du multiplexeur 170.

Les sorties parallèles des registres 120 et 90 sont appliquées aux entrées parallèles du comparateur 140. La sortie 141 de ce comparateur est mémorisée par une mémoire 150. La sortie de cette mémoire agit sur le circuit logique "ET" 154 dont la sortie modifie par l'intermédiaire des entrées 164 et 173 respectivement l'état des multiplexeurs 160 et 170. Le circuit d'horloge 152 comprend un compteur qui compte un nombre d'impulsions équivalent au nombre de cellules constituant l'ensemble des registres 90, 80 et 60 avant de délivrer un signal entraînant la remise à zéro des mémoires 151 et 150 et d'arrêter l'émission d'impulsions.

Le codeur 54 est propre à convertir des signaux du type NRZ tels que représentés à la figure 5A et issus d'une lecture en série du registre 60 en signaux par exemple biphase différentiels du type représenté à la figure 5B. Dans ces derniers chaque passage d'un bit au suivant est marqué par une transition. En outre, aux bits nuls correspond une fréquence de transition double de celle des bits de niveau 1. Ce type de signaux biphase permet d'exciter, tant en émission qu'en réception, les transducteurs 50 et 40.

Dans le circuit de la figure 3, les signaux biphase différentiels du type représenté à la figure 5B captés par le transducteur 50 sont décodés par le décodeur 100 pour produire, d'une part, des signaux de données du type NRZ (figure 5A) sur la sortie 101 et, d'autre part, des signaux d'horloge sur sa sortie 102.

En fonctionnement, le transducteur 40 (figure 4) du terminal de contrôle d'accès 11 émet périodiquement, par exemple tous les 200 millisecondes, une séquence de bits ou message d'interrogation Si un objet portatif 10 a été placé devant l'ouverture 36, cette séquence est captée par le transducteur 50 (figure 3). Le message correspondant apparaît à la sortie 101 du décodeur 100 et est enregistré séquentiellement dans les registres à décalage 120 et 110, sous la commande du signal de cadencement (sortie 102), l'état de repos des multiplexeurs 160 et 170 établissant respectivement les liaisons 161—163 et 171—174. A la fin de cet enregistrement, le comparateur 130 émet un signal sur sa sortie 131, si les contenus des registres 80 et 110 coïncident. Dans le cas contraire, la lecture de l'objet portatif n'est pas poursuivie. On obtient ainsi une première sécurité contre les tentatives d'utilisation d'objets portatifs non autorisés dans le système d'accès. On remarque que l'ordre de transmission des bits de l'un des registres 80 ou 110 au comparateur peut être modifié par un câblage approprié de façon à chiffrer la correspondance entre le message issu du terminal et le message contenu dans le registre 80 conformément aux explications données ci-dessus pour la liaison entre le registre 60 et l'afficheur 16.

Si le comparateur 130 délivre à sa sortie 131 un signal de validation, ce signal est mémorisé en 151 et le circuit d'horloge 152 autorise alors la lecture série des informations issues des registres 60, 80 et 90 et leur transmission, après codage par le codeur 54, par le transducteur 50.

Le multiplexeur 160 étant en position 161, 163, les informations sorties en série du registre 80 se trouvent de ce fait réintroduites automatiquement dans les registres 90, 80 et 60.

Les informations issues du transducteur 50 sont captées par le transducteur 40 du terminal d'accès 11 qui se trouvait au repos après l'émission de son message d'interrogation. Le message résultant est transmis par la ligne 45 à un calculateur logé dans l'embase 30 de ce terminal. Celui-ci procède à la vérification de l'information ainsi recueillie.

Le terminal d'accès il transmet un message de réinscription de l'objet portatif par la ligne d'émission 46 au transistor d'excitation 44 du transducteur.40. Après sa transmission par signaux acoustiques au transducteur 50, le message amplifié puis décodé est enregistré séquentiellement dans les registres 120 et 110 sous la commande du signal de cadencement issu du décodeur (sortie 102). Si la comparaison des messages contenus dans les registres 110 et 80 est correcte et que la comparaison des messages contenus dans les registres 120 et 90 indique que le message qui va suivre est une réinscription (double sécurité) les multiplexeurs 160 et 170 basculent et le nouveau message est enregistré en série dans les registres à décalage 90, 80 et 60 jusqu'à ce qu'ils soient entièrement remplis. Dans cette condition, la partie du message stockée dans les cases du registre 60 reliées à l'afficheur 16 correspond à une information de quantité, reflétant par exemple un nombre de points restant à utiliser pour l'accès à des remontées mécaniques nécessitant le paiement d'un nombre de points dont le montant peut être différent d'une remontée à l'autre.

Une autre information portée dans le registre 60 peut correspondre, par exemple, à une date limite d'utilisation de l'objet portatif.

Les données inscrites dans le reste du registre 60 et dans le registre 80 peuvent correspondre à des informations d'identification de la nature de l'objet portatif. Comme pour le registre 80 et/ou 110, le cablage de l'une et/ou de l'autre des liaisons des registres 90 et 120 au comparateur 140 peut être brouillé.

A l'issue du message provoquant la réinscription des registres 60, 80 et 90, le registre 110 est initialisé pour une séquence de lecture de l'objet portatif qui réemet alors les nouvelles informations stockées dans les registres 90, 80 et 60 pour contrôle de la conformité des inscriptions, les multiplexeurs 160 et 170 étant à nouveau en position de repos. Si cette vérification n'a pas été concluante, une nouvelle séquence de réécriture peut être tentée avant d'ouvrir le portillon. Si le résultat de cette vérification est satisfaisant, un signal d'autorisation de passage peut être délivré sur une ligne de commande 116 (figure 2) pour libérer un tourniquet 110 contrôlant le passage dans un couloir d'accès 112. A cet effet, un dispositif de blocage 114 contrôlé par la liaison de commande en 116 est prévu sur le tourniquet 114.

L'ensemble du circuit représenté à la figure 3 est intégré sur une puce noyée dans la matière plastique de la plaquette 12 formant le boîtier 12.

La figure 6 représente une variante de réalisation du circuit de la figure 3 particulièrement bien adaptée au cas où l'état initial des cellules du registre à décalage 60 est inconnu au moment de la mise sous tension de l'objet portatif, c'est-à-dire lorsque la pile 51 est chargée dans celui-ci. On a conservé sur la figure 6 les mêmes numéros de référence pour les éléments identiques. On se bornera à décrire les éléments qui en diffèrent, avec leur fonctionnement. Au lieu d'un registre de lecture tel que 80 monté, en série avec le registre à décalage 60, l'objet portatif de la figure 6 comprend un registre de lecture 180 qui est constitué par une mémoire morte appliquant sur les entrées respectives du comparateur de lecture 230 un code d'identification en lecture invariable. Dans cet exemple, celui-ci est constitué par trois bits au niveau 1. Le comparateur de lecture effectue la comparaison bit à bit entre le contenu de ce registre 180, et le contenu d'un registre 210 équivalent au registre 110 de la figure 3. Sa sortie 231 commande la mémoire 151.

Un registre d'écriture 190 a son entrée série 194 connectée à la sortie 163 du multiplexeur 160 et sont entrée 193 de cadencement connectée à la sortie 174 du multiplexeur 170. La sortie série 191 du registre 190 est connectée à l'entrée 62 du registre de données 60. Ce registre 190 comprend dans cet exemple 16 cellules. Les sorties parallèles de ces cellules sont reliés aux entrées parallèles d'un comparateur bit à bit 240 par une liaison 241 dont le cablage est brouillé comme représenté. Le comparateur 240 est, d'autre part, connecté par une deuxième liaison multi-bit 242 aux sorties parallèles d'un registre à décalage 220 jouant le rôle du registre à décalage 120 de la figure 3 et dont l'entrée série 224 est connectée à la sortie de données 101 du décodeur 100 et la sortie série est connectée à l'entrée série 214 du registre 210. La sortie 241 du comparateur 240 est couplée à l'entrée de la mémoire 150.

En fonctionnement, si l'on suppose que la pile 51 vient d'être nouvellement placée ou replacée, le contenu des cellules des registres 60 et 190 est aléatoire et inconnu.

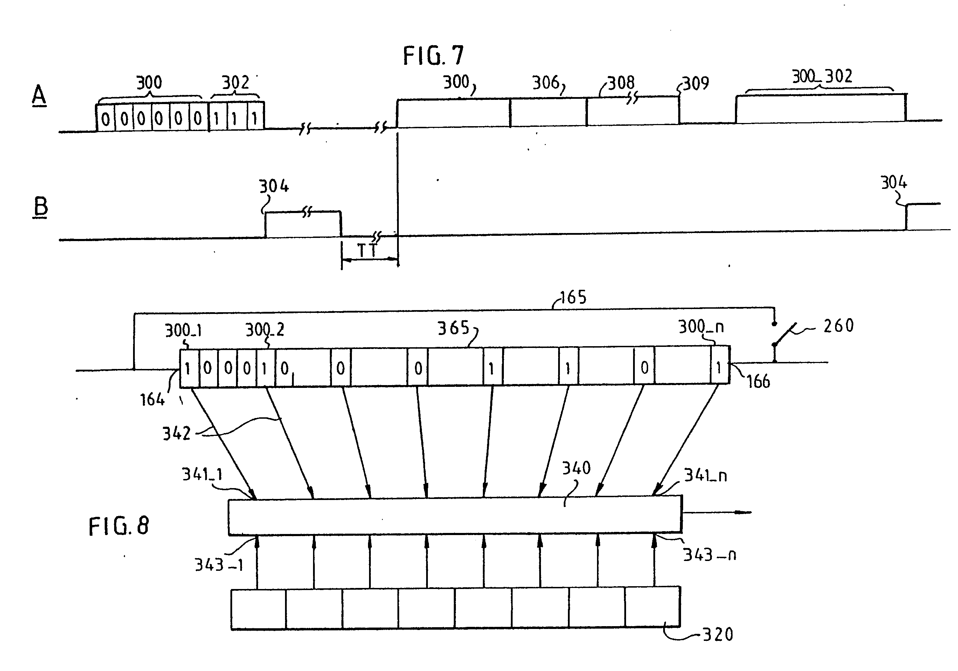

Le signal d'interrogation issu du terminal (figure 7A) est composé d'une série de bits de synchronisation constituée par des bits de niveau 0 (série 300) immédiatement suivis par un train de trois bits de lecture 302 composés de bits au niveau 1. Ce signal est répété périodiquement. Lorsqu'il est capté par le transducteur 50 du circuit de la figure 6, le registre de contrôle de lecture 210 se trouve chargé par trois bits de niveau 1. Un signal de coïncidence apparaît à la sortie du comparateur 230 qui met à 1 la mémoire 151. Comme précédemment, l'horloge 152 se trouve déclenchée et permet, par les entrées de cadencement 63 et 193, la lecture en série des registres à décalage 60 et 190 dont le contenu est inconnu. Cette information est conservée grâce au rebouclage 65. L'enveloppe du signal de lecture est représentée schématiquement en 304 sur la figure 7B. Elle suit la fin de train 302. La fin du signal de lecture 304 est suivi d'un temps de traitement TT (figure 7B) au bout duquel le terminal renvoie un nouveau train de synchronisation 300 suivi d'un train de 16 bits de code écriture 306. Ce train est composé de bits correspondants aux 16 derniers bits ayant été reçus par le terminal à la fin de l'interrogation en lecture de l'objet portatif. Il correspond donc en principe au contenu du registre d'écriture 190 en tenant compte du brouillage des pistes de la liaison 241. Le terminal est informé du code de brouillage. En conséquence, le code écriture 306 est envoyé dans le registre de contrôle d'écriture 220. Si ce code correspond effectivement au contenu du registre d'écriture 190, le comparateur 240 fait basculer la mémoire 150. Dès lors, la boucle 65 est ouverte comme dans le cas de la figure 3 (commutation du multiplexeur 160). Le train d'impulsions 308 suivant immédiatement le code écriture 306 se trouve alors introduit dans des registres 60 et 190 en série. Il se termine en 309 lorsque l'information de ces registres a été entièrement renouvelée. Comme précédemment, un nouveau signal d'interrogation en lecture 300, 302, est envoyé par le terminal pour provoquer une lecture de vérification 304 (figure 7B).

L'information entrée dans le registre 190 a été élaborée par le terminal. Elle peut correspondre à un code de validité spécialement choisi parmi un très grand nombre de codes. Ce code de validité peut résulter également d'une partie de l'information entrée dans le mémoire constituée par les registres 60 et 190. Lors de la prochaine lecture, cette information sera prise en compte par le terminal pour, après vérification de la suffisance du nombre d'unités de paiement contenu dans le registre 60 et des autres conditions de validité du titre de paiement présentées par l'objet portatif, former un code de contrôle en écriture. Celui-ci, après vérification avec le code de validité 190, déclenchera l'autorisation de réinscription d'un nouveau message. Ainsi, il n'est pas possible d'utiliser cette autorisation pour l'inscription d'un autre objet portatif.

Même si le contenu des registres 60 et 190 peut être lu à la suite de la découverte du code du registre 180 par un fraudeur éventuel, il sera extrémement difficile à celui-ci de découvrir la clé ouvrant l'accès à la réinscription de la mémoire à registre à décalage.

On a représenté pour la simplicité des explications, les registres 60 et 190 distincts l'un de l'autre. En pratique ils peuvent être constitués par un seul et même registre. On peut d'ailleurs améliorer encore la sécurité du système avec un seul registre à décalage 365 (figure 8) dans lequel sont stockées l'ensemble des informations à mémoriser dans l'objet et qui est rebouclé sur lui-même par une boucle 165 entre sa sortie série 164 et son entrée série 166 à travers un multiplexeur 260 commandé de la même façon que le multiplexeur 160 de la figure 6. Le comparateur d'écriture 240 est remplacé par un comparateur 340 dont les entrées 341-1 à 341-n sont reliées à n sorties parallèles du registre 365 dispersées sur toute la longueur de celui-ci, comme représenté par les conducteurs de la liaison 342. Celle-ci peut être en outre brouillée par un cablage approprié comme dans le cas de la liaison 241 de la figure 6. Le comparateur 340 effectue la comparaison bit à bit des informations présentes sur ses entrées 341-1 à 341-n et de celles présentes sur ses entrées 343-1 à 343-n en provenance d'un registre de contrôle d'écriture 320 analogue au registre 220 dans son rôle et dans ses connexions. La position des n cases 300-1 300-2, 300-n du registre 365 relié au comparateur 340 est connue de tous les terminaux du système. Ces derniers sont donc à même de tirer de l'ordre de succession temporel des bits reçus en lecture du registre 365 une information sur le code de validité contenu dans ce registre à un stade donné de son utilisation. Cette information de validité est renouvelée à chaque réinscription. Les bits des cellules 300-1, 300-2 à 300-n peuvent bien entendu faire partie de l'information utile stockée dans le registre 365.

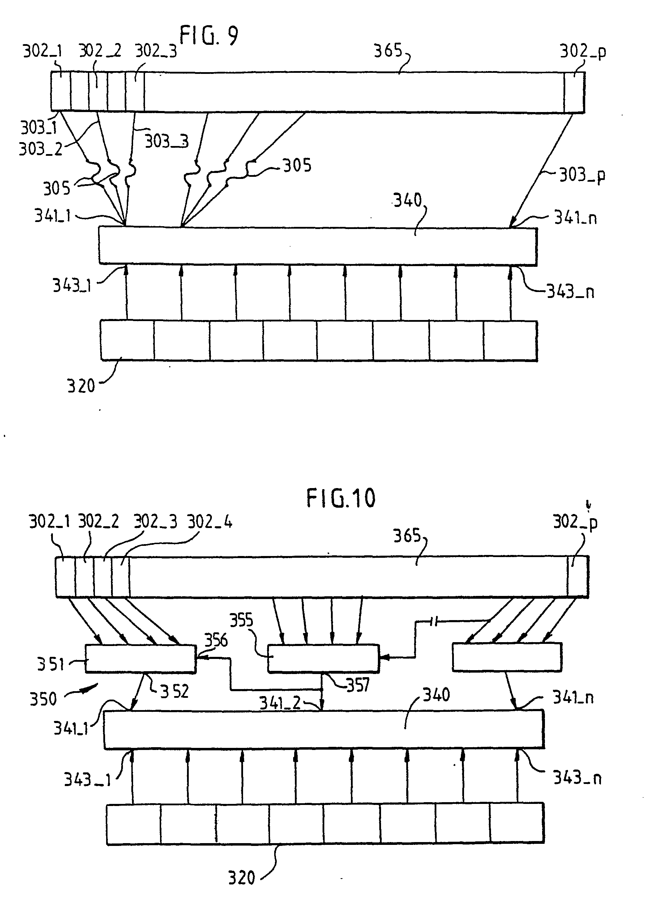

La structure de la figure 8 peut encore être améliorée si, au lieu de faire correspondre à chacune des n entrées 341-1 à 341-n du comparateur 340, une seule cellule du registre 365, on lui fait correspondre plusieurs cellules, par exemple trois, numérotées 302-1 à 302-3 dans le cas de l'entrée 341-1 de la figure 9, parmi p sorties parallèles du registre 365. Les liaisons entre cette entrée et ces différentes cellules (303-1, 303-2, 303-3) comportent des fusibles 305 qui peuvent être sélectivement fondus par microprogrammation de façon à ne laisser active qu'une seule des liaisons 303-1 à 303-3 avant la mise en service des objets portatifs à mémoire. Bien entendu, les terminaux sont adaptés en fonction du code particulier adopté pour la fusion des fusibles 305.

Le système de liaison à fusible de la figure 9 peut être remplacé par un système de codage ou de multiplexage 350 de type actif établissant une correspondance déterminée entre un contenu des cellules 302-1 à 302-p du registre 365 et la combinaison de signaux sur les entrées 341-1 à 341-n du comparateur 340. Dans le cas de la figure 10 par exemple, un codeur 351 reçoit sur quatre entrées les signaux correspondants au contenu des cellules 302-1 à 302-4. Il reçoit sur sont entrée 356 un signal qui, suivant qu'il est présent ou absent, modifie la liaison entre les cellules 302-1 à 302-4 et la sortie 352 du codeur reliée à l'entrée 341-1. Ce signal sur l'entrée 356 dépend lui-même du signal de sortie 357 d'un dispositif de codage 355 reliant plusieurs cellules du registre 365 à une entrée 341-2 du comparateur 340. La clé de code mise en oeuvre par un circuit de codage tel que 350 est connue des terminaux de lecture. Elle réalise un brouillage difficile à percer de la correspondance entre les différentes combinaisons de bits de validité qui peuvent être inscrites dans le registre 365 et l'information de contrôle qui doite être appliquée dans le registre 320 pour permettre la réinscription du registre 365.

On remarque qu'on a ainsi conçu un système de contrôle d'accès particulièrement simple, ne comportant pas de pièce mécanique mobile, insensible aux champs magnétiques, et qui peut être facilement protégé contre les actions extérieures.

Ce système est d'emploi facile pour les utilisateurs, notamment mais non exclusivement dans des installations où il permet de contrôler un accès. En particulier, il ne nécessite pas des opérations de maniement délicates des objets portatifs qu'il met en oeuvre. Il permet ainsi de minimiser les pertes de temps au passage du dispositif de contrôle.

L'objet portable est d'une réalisation peu coûteuse puisque son circuit de mémoire consiste essentiellement en un registre à décalage qui fait seulement l'objet d'une lecture et d'une réinscription série à chaque opération de contrôle et cela dans des conditions de sécurité satisfaisantes.

Dans le cas où ces objets sont portés par les utilisateurs à proximité de leur corps, par exemple à l'aide d'un bracelet, le circuit électronique est maintenu à une température sensiblement constante qui en améliore encore la fiabilité de fonctionnement.

Le système peut être utilisé pour d'autres applications que le contrôle d'accès, par exemple la comptabilisation d'unités de paiement pour des jeux d'argent, courses de chevaux, le suivi de production de pièces pouvant être individualisées per le choix de certains paramètres (couleurs) ou de certaines options (construction automobile par exemple).

## Revendications

1. Objet portatif destiné à servir dans un système de contrôle automatique, du type comprenant, dans un boîtier (12):

—un circuit électronique muni d'au moins un registre à décalage formant mémoire principale (60, 80, 90; 60, 190) pour mémoriser des informations utiles, comprenant un droit de passage,

—un dispositif émetteur-récepteur (50, 52, 54, 55, 100) sans contact, capable, dans une condition de couplage avec un terminal du système de contrôle, d'émettre des signaux de bits série correspondant à la lecture desdites informations dans ledit registre à décalage, et de recevoir des signaux de bits série pour la réinscription d'informations utiles dans ce registre à décalage,

—des moyens d'enregistrement (110; 210) d'une première information de contrôle émise par le terminal et reçue par le dispositif émetteur-récepteur de l'objet portatif lors de chaque utilisation de ce dernier dans le but d'obtenir ledit droit de passage,

—un dispositif de vérification (130, 230) de la concordance entre ladite première information de contrôle et une première information de validité mémorisée (80, 180) dans ledit objet, pour autoriser la lecture de la mémoire principale de l'objet, au profit du terminal,

—des moyens (151, 152, 160, 170) qui réagissent à cette première vérification de concordance en faisant sortir bit à bit le contenu du registre à décalage vers le dispositif émetteur-récepteur, pour transmission au terminal, tout en faisant recirculer les bits dudit contenu dans le registre à décalage,

caractérisé en ce que l'objet portatif comprend aussi, également dans son boîtier (12):

—des moyens d'enregistrement (110, 120; 210, 220) coopérant avec ledit dispositif émetteur-récepteur (50, 52, 54, 55, 100) de telle façon que, le terminal ayant retransmis vers l'objet portatif les données utiles lues dans la mémoire principale (60, 80, 90; 60, 190) de ce dernier, ils enregistrent une partie de ces données utiles (60, 90; 190) constituant une seconde information de contrôle,

—un dispositif (130, 140; 230, 240) pour vérifier la concordance entre cette seconde information de contrôle et une seconde information de validité, stockée dans l'objet, et comprenant une partie des données utiles (80, 90; 190) contenues et recirculées dans le registre à décalage, afin d'autoriser l'accès en écriture à la mémoire principale de l'objet, au profit du terminal,

—des moyens (150, 151, 154, 160, 170) qui réagissent à cette autorisation d'écriture de telle façon que des informations utiles modifiées (60', 80', 90'; 60', 190'), transmises depuis le terminal à l'objet portatif pendant une utilisation de ce dernier, sont enregistrées dans la mémoire principale dudit objet portatif pour y constituer une seconde information de validité modifiée en vue d'une utilisation ultérieure dudit objet;

le terminal étant ainsi en mesure:

a) d'exécuter une modification de ladite seconde information de validité stockée dans l'objet portatif à l'occasion de chaque utilisation de ce derner dans le but d'obtenir ledit droit de passage,

b) de vérifier que ladite modification de ladite seconde information de validité a été correctement enregistrée dans ledit registre à décalage (60, 80, 90; 60, 190),

c) de procéder; le cas échéant, à une ou plusieurs réinscriptions de ladite seconde information de validité modifiée (60', 80', 90'; 60', 190') et

d) de n'accorder ledit droit de passage, mettant fin à une utilisation dudit objet portatif dans ce but, que si ladite seconde information de validité modifiée (60', 80', 90'; 60', 190'), transmise pendant ladite utilisation de l'objet portatif, a été correctement enregistrée dans ledit registre à décalage (60, 80, 90; 60, 190).

2. Objet portatif selon la revendication 1, caractérisé en ce que l'information de validité est formée de bits dispersés parmi des bits d'information utile stockés dans la mémoire à registre à décalage (365).

3. Objet portatif selon l'une des revendications précédentes, caractérisé en ce que le dispositif de vérification (240) comprend des cellules de comparaison bit à bit des informations de validité et de contrôle qui sont reliées à des cellules correspondantes du registre à décalage (60, 190) et/ou desdits moyens d'enregistrement (220) dans un ordre différent de l'ordre de transmission des bits de l'une de ces informations au moins.

4. Objet portatif selon l'une des revendications précédentes, caractérisé en ce que le dispositif de vérification est relié par une première liaison (350) à des cellules du registre à décalage (365) affectées à l'information de validité et par un deuxième liaison (343-1 ou 343-n) à des cellules des moyens d'enregistrement (320) de l'information de contrôle, l'une de ces liaisons comprenant un codeur (350) destiné à brouiller la correspondance entre ces informations.

5. Objet portatif selon l'une des revendications précédentes, caractérisé en ce qu'il comprend en outre un dispositif d'enregistrement (110, 210) d'une information de contrôle en lecture et des moyens de vérification (130, 230) de la concordance entre cette information de contrôle et une information de validité mémorisée dans ledit objet portatif.

6. Objet portatif selon la revendication 5, caractérisé en ce que l'autorisation de réinscription est fournie en réponse à la fois desdits moyens de vérification en lecture (230) et auxdits moyens de vérification de concordance premier nommés (240).

7. Objet portatif selon l'une des revendications 5 et 6, caractérisé en ce que ladite information de validité en lecture est inscrite dans l'objet portatif en dehors de ladite mémoire à registre à décalage.

8. Objet portatif selon l'une des revendications précédentes, caractérisé en ce que le moyen de couplage dudit objet est constitué par un transducteur de signaux acoustiques (50).

**Patentansprüche**

1. Tragbarer Gegenstand für ein automatisches Überwachungssystem, bei dem in einem Gehäuse (12) enthalten ist:

—eine elektrische Schaltung mit mindestens einem Schieberegister, das einen Hauptspeicher (60, 80, 90; 60, 190) zur Speicherung von nützlichen, eine Durchgangsberechtigung enthaltenden Information aufweist,

—eine kontaktlose Anordnung Sender-Empfänger (50, 52, 54, 55, 100), die in Verbindung mit einem Terminal eines Überwachungssystems geeignet ist, Signale aus seriellen bits auszusenden, die den gelesenen Informationen im Schieberegister entsprechen, und Signale aus seriellen bits zu empfangen, um nützliche Informationen in das Schieberegister wieder einzutragen,

—Organe (110; 210) für die Registrierung einer ersten Kontrollinformation, die durch den Terminal gesendet und durch die Anordnung Sender-Empfänger des tragbaren Gegenstandes anlässlich jedes Gebrauches des letzteren zum Zweck des Erhaltes der Durchgangsberechtigung empfangen wird,

—eine Anordnung (130, 230) zur Überprüfun der Übereinstimmung zwischen der ersten Kontrollinformation und einer ersten, im Gegenstand gespeicherten (80, 180) Gültigkeitsinformation, um das Lesen des Hauptspeichers des Gegenstandes zugunsten des Terminals zu gestatten,

—Organe (151, 152, 160, 170), welche auf Grund dieser ersten Überprüfung der Übereinstimmung den Inhalt des Schieberegisters bit für bit zur Übertragung an den Terminal an die Anordnung Sender-Empfänger ausgeben, wobei die bits im Schieberegister im Kreislauf geführt werden, dadurch gekennzeichnet, daß der tragbare Gegenstand in seinem Gehäuse (12) außerdem enthält:

—Registrierorgane (110, 120; 210, 220), die mit der Anordnung Sender-Empfänger (50, 52, 54, 55, 100) derart zusammenarbeiten, daß sie einen Teil der gegebenen nützlichen Informationen (60, 90; 190), der eine zweite Kontrollinformation bildet, registrieren, wobei der Terminal die gegebenen nützlichen Informationen im Hauptspeicher (60, 80, 90; 60, 190) des tragbaren Gegenstandes diesem zurückgesendet hat,

—eine Anordnung (130, 140; 230, 240) zur Prüfung der Übereinstimmung zwischen dieser zweiten Kontrollinformation und einer zweiten Gültigkeitsinformation, gespeichert im Gegenstand und enthaltend einen Teil der gegebenen nützlichen Informationen (80, 90; 190) die im Schieberegister enthalten und zirkuliert sind, damit zugunsten des Terminals der Zugang zur Eintragung im Hauptspeicher des Gegenstandes freigegeben wird,

—Organe (150, 151, 154, 160, 170), die auf Grund der Freigabe derart reagieren, daß vom Terminal während eines Gebrauches des tragbaren Gegenstandes an diesen gesendete modifizierte nützliche Informationen (60', 80', 90'; 60', 190') im Hauptregister des tragbaren Gegenstandes registriert werden, um dort eine zweite Gültigkeitsinformation zu bilden, die im Hinblick auf einen späteren Gebrauch des Gegenstandes modifiziert ist;

der Terminal ist daher in der Lage:

a) anlässlich jeden Gebrauches des tragbaren Gegenstandes zum Zweck der Erreichung eines Durchgangsrechtes eine Modifikation der im tragbaren Gegenstand gespeicherten zweiten Gültigkeitsinformation durchzuführen,

b) zu prüfen, ob die Modifikation der zweiten Gültigkeitsinformation im Scheiberegister (60, 80, 90; 60, 190) richtig registriert ist,

c) gegebenenfalls eine oder mehrere Wiedereintragungen der modifizierten zweiten Gültigkeitsinformation (60', 80', 90'; 60', 190') durchzuführen und

d) am Ende des Gebrauches des tragbaren Gegenstandes das Durchgangsrecht zu verweigern, wenn die während des Gebrauches des tragbaren Gegenstandes gesendete zweite modifizierte Gültigkeitsinformation (60', 80', 90'; 60', 190') richtig im Schieberegister (60, 80, 90; 60, 190) registriert war.

2. Tragbarer Gegenstand nach Anspruch 1, dadurch gekennzeichnet, daß die Gültigkeitsinformation aus bits gebildet ist, die vermischte bits einer im Speicher des Schieberegisters (365) gespeicherten nützlichen Information sind.

3. Tragbarer Gegenstand nach einem der vorstehenden Ansprüche, dadurch gekennzeichnet, daß die Prüfanordnung (240) Zellen für das Vergleichen bit auf bit der Gültigkeits- und Kontrollinformationen aufweist, die mit den entsprechenden Zellen des Schieberegisters (60, 190) und/oder den Registrierorganen (220) in einer Reihenfolge verbunden sind, die von der Reihenfolge der Übertragung von bits wenigstens einer dieser Informationen verschieden ist.

4. Tragbarer Gegenstand nach einem der vorstehenden Ansprüche, dadurch gekennzeichnet, daß die Prüfanordnung durch eine der Gültigkeitsinformation zugeordnete erste Verbindung (350) mit den Zellen des Schieberegisters (365) und durch eine zweite Verbindung (343-1 oder 343-n) mit den Zellen der Registrierorgane (320) der Kontrollinformation verbunden ist, wobei eine dieser Verbindungen einen Kodierer (350) enthält, der dazu bestimmt ist, die Übereinstimmung zwischen diesen Informationen zu vermischen.

5. Tragbarer Gegenstand nach einem der vorstehenden Ansprüche, dadurch gekennzeichnet, daß dieser weiters eine Registrieranordnung (110, 210) für eine Lese-Kontrollinformation sowie Prüforgane (130, 230) aufweist, die die Übereinstimmung zwischen dieser Kontrollinformation und einer im tragbaren Gegenstand gespeicherten Gültigkeitsinformation prüfen.

· 6. Tragbarer Gegenstand nach Anspruch 5, dadurch gekennzeichnet, daß die Zustimmung zur Wiedereintragung beim Ansprechen der Prüforgane (230) und der erstgenannten Organe (240) zur Prüfung der Übereinstimmung geliefert wird.

7. Tragbarer Gegenstand nach einem der Ansprüche 5 und 6, dadurch gekennzeichnet, daß die Gültigkeitsinformation im tragbaren Gegenstand außerhalb des Speichers des Schieberegisters eingetragen ist.

8. Tragbarer Gegenstand nach einem der vorstehenden Ansprüche, dadurch gekennzeichnet, daß das Verbindungsmittel des Gegenstandes durch einen akustischen Signalwandler (50) gebildet ist.

**Claims**

1. A portable object intended to serve in an automatic control system, the object being the type comprising, in a housing (12):

an electronic circuit fitted with at least one shift register forming a main memory (60, 80, 90; 60, 190) for storing useful information, including a right of passage;

a no-contact transmitter-receiver device (50, 52, 54, 55, 100) capable, when in a coupling condition with a control system terminal, of emitting signals in the form of serial bits corresponding to reading said information in said shift register, and of receiving signals in the form of serial bits for rewriting useful information in said shift register;

recording means (110; 210) for recording a first control information transmitted by the terminal and received by the transmitter-receiver device of the portable object each time the object is used for the purpose of obtaining said right of passage;

a verification device (130, 230) for verifying concordance between said first control information and a first validity information (80, 180) stored in said object, in order to authorize the terminal to read the main memory of the object;

means (151, 152, 160, 170) which reacts to the first verification of concordance by causing the contents of the shift register to be output bit-by-bit to the transmitter-receiver device for transmission to the terminal, while also causing said bits to recirculate the contents of said shift register;

characterized that the portable device also comprises, likewise in its housing (12):

recording means (110, 120; 210, 220) co-operating with said transmitter-receiver device (50, 52, 54, 55, 100) in such a manner that after the terminal has retransmitted the useful data read from the main memory (60, 80, 90; 60, 190) of the portable object back to the portable object, said recording means record a portion of said useful data (60, 90; 190) constituting a second control information;

a device (130, 140; 230, 240) for verifying concordance between said second control information and a second validity information stored in the object and comprising a portion of the useful data (80, 90; 190) contained and recirculated in the shift register in order to authorize write access to the terminal in the main memory of the object; and

means (150, 151, 154, 160, 170) which react to said write authorization in such a manner that the modified useful information (60', 80', 90'; 60', 190') transmitted from the terminal to the portable object while the portable object is being used is recorded in the main memory of said portable object in order to constitute a second validity information which is modified for the purpose of subsequent use of the object;

the terminal thus being capable of:

a) modifying said second validity information stored in the portable object each time the portable object is used for the purpose of obtaining a right of passage;

b) verifying that said modification of said validity information has been correctly recorded in said shift register (60, 80, 90; 60, 190);

c) proceeding, where appropriate, with one or more reinscriptions of said second modified validity information (60', 80', 90'; 60', 190'); and

d) in granting said right of passage, thereby terminating thsmkse of said portable object for this purpose, only if said second modified validity information (60', 80', 90'; 60', 190') as transmitted during use of said portable object has been correctly recorded in said shift register (60, 80, 90; 60, 190).

2. A portable object according to claim 1, characterized in that the validity information is formed by bits which are dispersed among useful information bits stored in the shift register memory (365).

3. A portable object according to any preceding claim, characterized in that the verification device (240) comprises cells for bit-by-bit comparison of the validity information and the control information, which cells are connected to corresponding cells of the shift register (60, 190) and/or of said recording means (220) in an order which is different from the order in which the bits of at least one of these items of information is transmitted.

4. A portable object according to any preceding claim, characterized in that the verification device is connected by a first link (350) to the cells of the shift register (365) concerned with the validity information and by a second link (343-1 or 343-n) to the cells of the recording means (320) for recording the control information, one of these links including a coder (350) for scrambling the correspondence between said items of information.

5. A portable object according to any preceding claim, characterized in that it further includes a recording device (110, 210) for recording read control information and verification means (130, 230) for verifying concordance between said control information and validity information stored in said portable object.

6. A portable object according to claim 5, characterized in that a reinscription authorization is provided in response both to said reverification means (230) and to said first named concordance verifying means (240).

7. A portable object according to any one of claims 5 and 6, characterized in that said read validity information is written in the portable object outside said shift register memory.

8. A portable object according to any preceding claim, characterized in that the coupling means of said object is constituted by an acoustic signal transducer (50).

# 0 061 373

FIG.1

FIG. 2

FIG. 4

FIG. 3

FIG.5A

FIG.5B

0 061 373

2

DE 51

FIG. 6

FIG. 7

FIG. 8

0 061 373

## FIG. 9

## FIG.10